# DEMANDE DE BREVET EUROPEEN

(11) **EP 1 640 939 A1**
(43) Date de publication de la demande: **29.03.2006**
(21) Numéro de dépôt: 04022508.8
(22) Date de dépôt: 22.09.2004
(51) Int. Cl.: G09B 21/04

(54) **Dispositif de communication**

(71) Demandeur: Beuret-Devanthery, Jöelle, 1010 Lausanne (CH)
(72) Inventeur: Beuret-Devanthery, Jöelle, 1010 Lausanne (CH)
(74) Mandataire: Bugnion Genève

(57) **Abrégé**

L'invention concerne un dispositif de communication entre une personne handicapée au moins de la vue et de l'ouie, connaissant le langage de communication Lorm et une personne ne connaissant pas ce langage de communication. Il comprend un clavier alphanumérique (24) et/ou un microphone relié à une unité de traitement de signaux. Ladite unité émet des signaux de commande de manière sélective et séquentielle vers des premiers éléments convertisseurs (2 à 22) situés sur la surface intérieure d'un gant (1). Le gant (1) est destiné à être porté par la personne handicapée. Ces premiers éléments convertisseurs (2 à 22) sont positionnés à des zones correspondant aux éléments du langage Lorm. Ils sont conçus pour transmettre à la peau des doigts et de la paume de la personne handicapée une sensation tactile. Ces signal de commande active un ou plusieurs des premiers éléments convertisseurs correspondant à un élément du langage Lorm.

## Description

La présente invention concerne un dispositif de communication entre une personne handicapée au moins de la vue et de l'ouie, connaissant le langage de communication Lorm et une personne ne connaissant pas ce langage de communication.

Les personnes handicapées de la vue ou de l'ouie ou de la parole réussissent à communiquer avec leur entourage relativement facilement en fonction des situations. Le malvoyant a la possibilité de discuter et de lire en utilisant l'alphabet braille. Le malentendant a la possibilité de parler et lire la réplique sur les lèvres de son interlocuteur ou utiliser le langage des signes voire lire la réplique de son interlocuteur transcrite sur une feuille de papier ou un écran. Le muet peut entendre et pour "parler" il doit transcrire ses paroles sur un papier ou écran ou en utilisant le langage des signes.

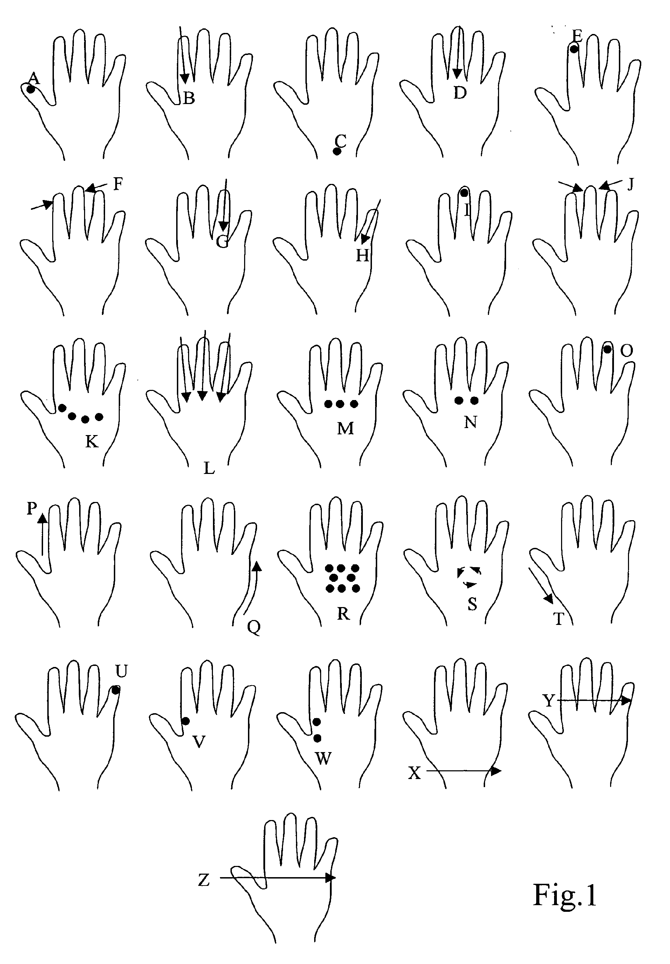

La communication est plus difficile lorsque la personne présente plus d'un handicap. Ainsi, le sourd-muet, souvent muet parce qu'il est né sourd, utilise pour communiquer le langage des signes ou la transcription sur papier ou autre moyen et il peut lire sur les lèvres. Le malvoyant et malentendant mais pouvant parler, il peut s'exprimer mais ne peut ni lire ni entendre la réplique sauf si son interlocuteur connaît le braille et dispose d'une écritoire en braille. Si en plus, le malvoyant et malentendant est aussi muet la possibilité de communication est extrêmement difficile. Il existe le langage Lorm permettant la communication entre deux personnes dont au moins une est handicapée de la vue et l'ouie voire de la parole. Ce langage utilise en principe la main gauche d'une personne paume vers le haut et les doigts écartés. La personne qui veut transmettre un message touche avec ses doigts certaines zones précises de la main ouverte selon le langage Lorm (figure 1). Par exemple en langage Lorm de langue allemande la lettre A correspond à l'extrémité du pouce. Les lettres E, I, O et U correspondent respectivement aux extrémités de l'index, majeur, annulaire et auriculaire. Pour la lettre J il faut toucher simultanément sur les deux côtés l'extrémité du majeur etc.

Lorsqu'une personne handicapée de la vue et de l'ouie désire communiquer avec une autre personne, elle peut parler directement à son interlocuteur pour autant que l'interlocuteur ne souffre pas des mêmes handicaps. Pour percevoir la réplique, il a besoin du langage braille ou Lorm. Si l'interlocuteur connaît un de ces langages la communication peut se faire, pour le braille une écritoire étant en plus nécessaire.

La présente invention a pour but de proposer un dispositif de communication au moyen du langage Lorm entre une personne handicapée au mois de l'ouie et de la vue, connaissant le langage Lorm et une personne ne connaissant pas le langage Lorm.

Le dispositif selon l'invention est caractérisé par le fait qu'il comprend un clavier alphanumérique et/ou un microphone relié à une unité de traitement de signaux et émettant des signaux de commande de manière sélective et séquentielle vers des premiers éléments convertisseurs situés sur la surface intérieure d'un gant destiné à être porté par la personne handicapée, lesdits premiers éléments convertisseurs étant positionnés à des zones correspondant aux éléments du langage Lorm, et conçus pour transmettre à la peau des doigts et de la paume de la personne handicapée une sensation tactile , lorsqu'ils reçoivent un signal de commande, chaque signal de commande activant un ou plusieurs de premiers éléments convertisseurs correspondant à un élément du langage Lorm.

L'avantage de ce dispositif est que la communication entre les deux personnes peut s'établir facilement. La personne handicapée non muette peut parler et son interlocuteur en utilisant soit le microphone soit le clavier peut répliquer, sa réplique étant traduite en langage Lorm perçu par la personne handicapée par l'activation des premiers convertisseurs de manière séquentielle et sélective pour transcrire chaque lettre de la réplique.

Si la personne handicapée est aussi handicapée de la parole, un dispositif plus complet est proposé caractérisé par le fait que le gant est muni de deuxièmes éléments convertisseurs positionnés aux zones correspondant aux éléments du langage Lorm conçus pour transmettre des signaux vers l'unité de traitement de signaux lorsqu'ils sont touchés, l'unité de traitement de signaux transformant les signaux reçus de deuxièmes éléments convertisseurs en signaux alphanumériques affichés à un écran et/ou en voix synthétique.

Ainsi, au moyen de ce dispositif la personne handicapée utilisera le langage Lorm pour communiquer avec son interlocuteur, ses paroles étant transcrites soit sur un écran soit en une voix synthétique soit les deux. L'interlocuteur répliquera comme précédemment soit en utilisant le clavier soit le microphone.

Selon une variante préférée, les convertisseurs sont agencés pour assurer la fonction des premiers et deuxièmes éléments convertisseurs. Des convertisseurs piézoélectriques peuvent avantageusement mais pas exclusivement être utilisés.

L'écran utilisé pour l'affichage peut être un écran tactile permettant aussi à être utilisé comme clavier alphanumérique.

L'unité de traitement de signaux, dans la variante la plus simple, est agencée pour transformer les signaux reçus du clavier ou du microphone en signaux de commande des éléments convertisseurs de manière sélective et séquentielle chaque signal de commande activant un ou plusieurs convertisseurs transmettant une sensation tactile sur la peau des doigts et la paume portant le gant, cette sensation tactile correspondant à un élément du langage Lorm.

Dans la variante la plus complète, l'unité de traitement est agencée pour traiter les signaux reçus des deuxièmes convertisseurs en voix synthétique et/ou texte alphanumérique affiché sur l'écran.

L'invention sera décrite plus en détail à l'aide du dessin annexé.

La figure 1 représente les éléments de base du langage Lorm en langue allemande.

La figure 2 est une vue schématique du dispositif selon l'invention.

La figure 3 est une vue en schémas blocs de la partie électronique du dispositif selon l'invention.

Le dispositif est constitué d'un gant 1 muni à des zones correspondantes à celles représentées à la figure 1 de plusieurs convertisseur 2 à 22. En réalité il y a beaucoup plus que les convertisseurs représentés. Les convertisseurs représentés sont choisis pour montrer quelques éléments du langage Lorm. Ces convertisseurs sont, par exemple, des convertisseurs piézoélectriques permettant lorsqu'ils sont activés par un signal de command de transmettre une vibration à la peau de l'utilisateur du gant 1. D'autres convertisseurs peuvent être utilisés, par exemple, des convertisseurs provoquant un picotement etc. De préférence ces convertisseurs ont une double fonction à savoir : 1. Transmettre une sensation tactile à la peau et 2. Transmettre un signal lorsqu'ils sont touchés, par exemple, pressés ou effleurés. Néanmoins, en fonction de la nature des éléments convertisseurs utilisés on peut avoir un premier groupe assurant la sensation tactile et un deuxième groupe assurant la deuxième fonction. Les deux groupes peuvent soit être juxtaposés soit superposés. En cas de superposition le premier groupe sera près de la peau de la main et le deuxième sur la surface extérieure du gant ou sous une couche de protection.

Les convertisseurs 2 à 22 sont reliés par des conducteurs de signaux à une unité de traitement de signaux située, par exemple, sur une courroie 23. Cette courroie 23 permet de fixer le gant sur le poignet par une boucle ou du VELCRO® ou similaire. La courroie 23 peut aussi supporter ou loger l'alimentation électrique (pile ou accumulateur rechargeable) et un écran 24 et le microphone.

L'écran 24 peut être un écran tel que couramment utilisé pour les téléphones portables ou les agendas électroniques permettant d'afficher un texte ou se transformer en clavier tactile. Un microphone et haut-parleur du même type que celui utilisé pour les téléphones portables peuvent aussi être utilisés. Une sortie pour une oreillette à la place du haut-parleur peut aussi être associée à l'écran 24.

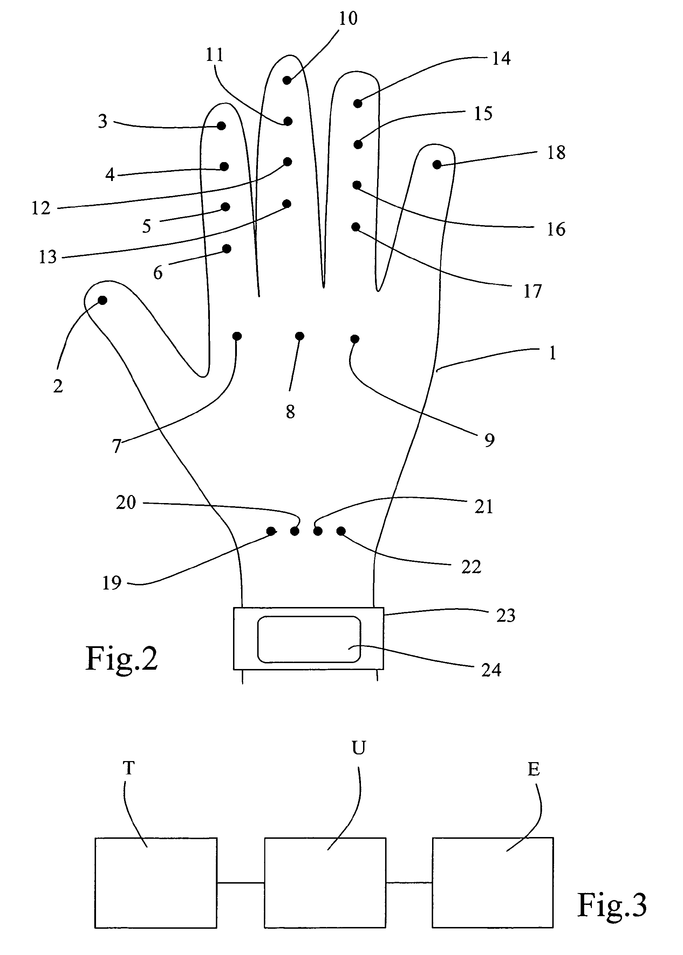

A la figure 3 on a représenté l'ensemble des convertisseurs T connectés à l'unité de traitement de signaux U connectée à l'écran /clavier/ microphone/haut-parleur E.

Les signaux émis par E (voix ou signaux du clavier) sont traités par U et transformés en signaux de commande d'un ou plusieurs des convertisseurs T de manière séquentielle. Dans l'autre sens les signaux émis en touchant un ou plusieurs convertisseurs sont communiqués à l'unité U et transformés soit en voix synthétique envoyée vers le haut-parleur soit en un texte affiché à l'écran.

En commandant ou en touchant l'un des convertisseurs 2, 3, 10, 14, 18 on communique respectivement les lettres A, E, I, O, U. De même en commandant ou touchant les convertisseurs 19 à 22 on communique la lettre X. Les convertisseurs 7 à 9 pour M; 8 et 9 la lettre N; 3 à 6 la lettre B; 10 à 13 la lettre D; 14 à 17 la lettre G etc.

Ce dispositif de faibles dimensions facilitera la communication entre une personne handicapée de la vue ouie et parole avec une personne ne connaissant pas le langage Lorm.

Accessoirement, en connectant le dispositif à un lecteur d'un support d'enregistrement d'un texte et en utilisant une interface adéquate la personne handicapée pourra prendre connaissance de ce texte. Il semble que certaines personnes malentendantes arrivent à percevoir voire apprécier les vibrations musicales. En connectant le dispositif selon l'invention à un lecteur d'un support d'enregistrement musical et à travers une interface adéquate l'utilisateur handicapé de l'ouie peut percevoir les rythmes musicaux.

Le dispositif tel que décrit correspond à une réalisation possible sans exclure d'autres réalisations possibles.

Ainsi, au lieu d'avoir un écran 24 fixé sur la courroie 23, on peut utiliser un écran détaché du dispositif et en communication avec le dispositif par signaux électromagnétiques couramment utilisés actuellement pour transférer des données entre ordinateurs portables, de poche, téléphones portables etc.

Le dispositif décrit est prévu pour être transporté par son utilisateur lors de ses déplacements. Néanmoins, on peut très bien envisager que le dispositif s'utilise dans une salle et dans ce cas pour faciliter la communication au lieu d'un petit écran on utilise un grand écran tactile ou avec un clavier pour communiquer ce qui rend plus facile la lecture et la frappe sur le clavier.

## Revendications

1. Dispositif de communication entre une personne handicapée au moins de la vue et de l'ouie, connaissant le langage de communication Lorm et une personne ne connaissant pas ce langage de communication, **caractérisé par le fait qu'**il comprend un clavier alphanumérique et/ou un microphone relié à une unité de traitement de signaux et émettant des signaux de commande de manière sélective et séquentielle vers des premiers éléments convertisseurs situés sur la surface intérieure d'un gant destiné à être porté par la personne handicapée, lesdits premiers éléments convertisseurs étant positionnés à des zones correspondant aux éléments du langage Lorm, et conçus pour transmettre à la peau des doigts et de la paume de la personne handicapée une sensation tactile, lorsqu'ils reçoivent un signal de commande, chaque signal de commande activant un ou plusieurs des premiers éléments convertisseurs correspondant à un élément du langage Lorm.

2. Dispositif selon la revendication 1, **caractérisé par le fait que** le gant est muni des deuxièmes éléments convertisseurs positionnés aux zones correspondant aux éléments du langage Lorm et conçus pour transmettre des signaux vers l'unité de traitement de signaux lorsqu'ils sont touchés, l'unité de traitement de signaux transformant les signaux reçus des deuxièmes éléments convertisseurs en signaux alphanumériques affichés à un écran et/ou en voix synthétique.

3. Dispositif selon la revendication 2, **caractérisé par le fait que** les éléments convertisseurs sont agencés pour assurer la fonction des premiers et deuxièmes éléments convertisseurs.

4. Dispositif selon l'une des revendications 1 à 3, **caractérisé par le fait que** le clavier alphanumérique est un écran tactile.

5. Dispositif selon l'une des revendications 1 à 4, **caractérisé par le fait que** les éléments convertisseurs sont des convertisseurs piézoélectriques.

6. Dispositif selon la revendication 1, **caractérisé par le fait que** l'unité de traitement de signaux est agencée pour transformer les signaux reçus du clavier alphanumérique en éléments du langage Lorm en activant les convertisseurs correspondants.

7. Dispositif selon la revendication 1, **caractérisé par le fait que** l'unité de traitement de signaux est agencée pour transformer les signaux reçus du microphone en éléments du langage Lorm en activant les convertisseurs correspondants.

8. Dispositif selon la revendication 2, **caractérisé par le fait que** l'unité de traitement de signaux est agencée pour transformer les signaux reçus des deuxièmes éléments convertisseurs en caractères alphanumériques qui sont affichés sur l'écran et /ou en voix synthétique.
